# EUROPEAN PATENT APPLICATION

(11) **EP 1 371 410 A1**
(43) Date of publication of application: **17.12.2003**
(21) Application number: 02077443.6
(22) Date of filing: 14.06.2002
(51) Int. Cl.: B01J 13/10

(54) **Complex coacervates containing whey proteins**

(71) Applicant: NIZO food research, 6718 ZB Ede (NL)
(72) Inventor: The designation of the inventor has not yet been filed
(74) Representative: Huygens, Arthur Victor

(57) **Abstract**

A new and improved method of micro-encapsulation by complex coacervation is provided which comprises the use of whey proteins together with a weak polyelectrolyte substituting for gelatin to allow better use of the encapsulated material, preferably in conjunction with gum Arabic.

## Description

This invention relates to a new and improved method of micro-encapsulation by coacervation to allow better use of the encapsulated material by using new ingredients.

Encapsulation is used to isolate a material from its environment, for example to mask unpleasant tastes, to protect a substance against oxidation, to control the release of a material, or to convert a liquid material into a free flowing powder.

Microencapsulation using complex coacervation has been known for a long time. The basic concept was developed in the 1930's by the National Cash Register Co. (Dayton, Ohio) and microencapsulation was first commercially applied in 1954 with the introduction of NCR carbonless paper using coacervation. See, for example, *Microencapsulation and Encapsulated Ingredients,* Judie D. Dziezak, Editor, 1988, and Van Valkenburg, J.W., *History and Classification of Microencapsulation,* in *Microcapsule Processing and Technology,* Marcel Dekker, Ed., New York, 1979, 27.

Various techniques have been developed for manufacturing microcapsules which can be divided into the following main groups: physical methods (e.g., spray drying, spray chilling, spray cooling, fluid bed coating, extrusion, cocrystallisation, freeze drying), chemical methods (e.g., molecular inclusion, interfacial polymerisation), and physicochemical methods (coacervationlaqueous phase separation, organic phase separation, liposome entrapment).

Coacervation is an original microencapsulation technique allowing to yield both very small capsules (10 µm - 70 µm) and also larger capsules (up to 500 µm). Coacervation is a very efficient technique which permits encapsulating up to 95% of the core material with a hard polymer wall (see for example U.S. Patent No. 6,106,875; and Magdassi S. and Vinetsky Y., *Microencapsulation of oil-in-water emulsion by proteins,* in: Benitia, B., *Microencapsulation: Methods and Industrial Applications,* Marcel Dekker, Ed., New York, 1997, 21-34).

The coacervation phenomenon is defined as simple or complex, depending on whether the system contains one or more biopolymer(s), respectively. Complex coacervation occurs when two oppositely charged polymers form an electrostatic complex. Complex coacervation can be used to encapsulate ingredients, such as vitamins, polyunsaturated fatty acids (PUFAs), essential oils, flavours, fragrances, health ingredients and pharmaceutical compounds. This can be done to increase shelf life, allow alternative processing, control release of the encapsulated component or mask the taste of it. Generally, a protein and a polysaccharide are used to form complexes. Commercially used polysaccharides are primarily gum arabic and carboxymethyl cellulose. As a protein, generally gelatin is used. Encapsulation with gelatin needs to be performed at a temperature above its gelling temperature, i.e. above 40°C. It is therefore not suitable for thermosensitive components.

US 4,808,408 discloses an improved complex coacervation process for micro-encapsulation of core ingredients that are partially soluble in the microcapsule walls, wherein the core ingredient is first mixed with a coacervation adjuvant prior to forming a first colloidal emulsion of core ingredient, and, after combining the first emulsion with a second colloidal emulsion and cooling to cause gelation, a water-soluble wax derivative is added. No pH adjustment is necessary and high yields of non-agglomerated microcapsules are said to have been obtained, both in terms of quantity of microcapsules and content of core ingredient. When deet is the core ingredient there is obtained a long-lasting mosquito repellent.

US 3,956,172 discloses an improved process for hardening microcapsules produced by microencapsulating hydrophobic oil droplets using a complex coacervation process with gelatin as one of the hydrophilic colloids, including the steps of: (1) emulsifying a water-immiscible oil in an aqueous solution of at least one first hydrophilic colloid ionizable in water and admixing an aqueous solution of at least one second hydrophilic colloid having an electric charge opposite to that of the first colloid, (2) causing coacervation of the colloids to occur by adding water thereto or adjusting the pH to form coacervates, (3) cooling said coacervates to cause gelling, (4) adjusting the pH to alkalinity and adding a hardening agent sequentially or simultaneously, (5) increasing the temperature so as to cause hardening, the improvement wherein glyoxal or glutaraldehyde in combination with formaldehyde is present during step (4). Among the hydrophilic colloids mentioned in this reference are gelatin, casein, and gum arabic.

US 5,540,927 discloses a microencapsulation process which employs gelatin and polyaspartic acid as coacervates providing non-permeable micro-capsules.

US 4,016,098 tackles the problem of the adverse effects of certain hardeners of gelatin, in particular formaldehyde, and discloses a process of microencapsulating hydrophobic oil droplets by complex coacervation using at least two hydrophilic colloids having opposite electric charges and being ionizable in water with at least one of the colloids being gellable, the improvement comprising hardening the coacervate wall by the presence of an oxidation product of a polysaccharide (e.g. a glucan, mannan, xylan, galacturonan, mannuronan, an N-acetylglucosamine derivative, or a heteroglucan derivative) as a hardening agent, and adjusting the pH.

The consumer is nowadays critical towards the use of animal-derived proteins, such as gelatin, which can be attributed at least in part to BSE disease. So far, most of the patent publications describe the use of various polysaccharides in combination with gelatin, but no alternatives for gelatin have been disclosed. Therefore, there is a need to investigate alternatives to gelatin. The present invention fulfills this objective.

After extensive research and investigation it has now been found that whey proteins can suitably be used in making complex coacervates which are believed to be valuable alternatives to gelatin.

Accordingly, the present invention provides a process for micro-encapsulation of core material which comprises
(a) emulsifying or dispersing said core material in an aqueous solution of whey protein;
(b) introducing a weak water-soluble polyelectrolye into said emulsion or dispersion;
(c) subjecting said emulsion or dispersion to conditions whereby complex coacervation of the whey proteins occurs to form microcapsules;
(d) optionally cross-linking said microcapsules; and
(e) recovering said microcapsules.

Suitable core materials include one or more oils, fats, drugs, vitamins, pesticides, and the like. It is essential that the applied core material is wetted by the complex coacervates. The amount of core material can be varied in a wide range, e.g. from 1% to 99%, preferably from about 60% to about 95%, depending on the properties of the core material. The concentration of whey protein and the concentration of the polymer can also be varied in wide ranges, e.g. from 99% to 1% with respect to the core material, preferably from about 40% to about 5% w/w, depending on the polymer and the core material applied.

Suitable weak water-soluble polyelectrolytes include anionic polysaccharides, *e.g.* gum Arabic, pectin, gellan gum, alginate, CMC, and the like, and cationic polysaccharides, *e.g.* chitosan. Of these, gum Arabic is preferred.

Preferably, the complex coacervation is induced by the addition of the weak polyelectrolyte to the emulsion or dispersion. Alternatively, the complex coacervation is induced by the adjustment of the pH of the emulsion, or by the combination of the addition of the weak polyelectrolyte and the adjustment of the pH. In case of the addition of an anionic polyelectrolyte, the adjustment of the pH is preferably accomplished by the addition of a weak acid to the emulsion or dispersion, for example acetic acid, or by the addition of a stronger acid, e.g. HCI or glucono-delta-lactone (GDL) providing a slow acidification, or by acidification by lactic acid bacteria. The pH should at least be decreased below 5.2, preferably to the range of 4.5 - 2.5. In case of the addition of an cationic polyelectrolyte, the adjustment of the pH is preferably accomplished by the addition of a base to the emulsion or dispersion, for example sodium hydroxyde, potassium hydroxyde, or calcium hydroxyde. The pH should at least be increased above 5.2, preferably to the range of 6.0 - 8.0.Complexation can also be induced by lowering the ionic strength of the solution, preferably below 0.1 molar.

Preferably, the capsule wall is hardened by cross-linking the whey proteins and the weak polyelectrolyte with a cross-linking agent, e.g. using a conventional cross-linking agent such as formaldehyde or glutaraldehyde, or by enzymatic reaction)

Recently, some fundamental studies have been reported by C. Schmitt: *Étude de la coacervation complexe entre la β-lactoglobuline et la gomme d'acacia en solution aqueuse,* Thesis, INPL-ENSAIA, Nancy, France, 2000. However, the combination of whey proteins and gum arabic was never used or suggested for encapsulation purposes.

It is to be noted that encapsulation processes without coacervation involving whey proteins, and compositions so obtained are known. For example, US 5,756,136 discloses controlled release encapsulation compositions in which a flavor or active agent is encapsulated in a matrix comprising whey proteins (predominantly β-lactoglobulin and α-lactalbumin). The encapsulation compositions may be incorporated into a fermented food product to protect both the flavor and the culturing microbes from one another, or in a dough and exhibit a reduced tendency to inhibit the rising of the dough. No mention is made of the use of whey proteins in complex coacervation.

Likewise, US 5,601,760 discloses milk-derived whey protein-based microencapsulating agents and a method for microencapsulation of volatile or non-volatile core materials. Whey protein concentrates or whey protein isolate alone or in admixture with other milk or non-milk derived products are used for microencapsulation of e.g. anhydrous milkfat and essential oils, and volatiles.

Whey proteins are water-soluble proteins from milk. Main components include beta-lactoglobulin, alpha-lactalbumin, or a mixture of both. It is a valuable coating material that is non-toxic, inexpensive and commercially available. Encapsulation of thermosensible material can be performed at cold or room temperature.

The matrix material can be essentially pure whey protein (i.e. beta-lactoglobulin, alpha-lactalbumin, or a mixture of both) or may be a mixture of whey protein and an anionic or cationic polysaccharide, and possibly other matrix components known in the art, which do not detract from the beneficial effects of the present encapsulation compositions. The anionic polysaccharide is preferably a weak polyelectrolyte, negatively charged, that will form a complex with the proteins, and more preferably a coacervate phase. Typical examples of such polysaccharides are: gum Arabic, pectin, gellan gum, alginate, carboxymethylcellulose. The cationic polysaccharide is preferably a weak polyelectrolyte, positively charged, that will form a complex with the proteins, and more preferably a coacervate phase, e.g. chitosan. Typically, the matrix material will comprise at least 25 wt.%, preferably at least 50 wt.%, most preferably 100 wt.% of whey protein and polysaccharide, based on the total weight of the matrix material. The ratio of protein to polysaccharide in the polymer matrix varies with the polysaccharide used and especially its charge, therefore each couple works in a defined range. For example whey protein and gum Arabic form a good matrix at a range of whey protein to polysaccharide of 2:1, but this range can be extended to 1:5 up to 50:1. Examples of other matrix components which may be present in the matrix material include other food proteins, lipids, modified food starch, maltodextrin, dextrose, lactose, sucrose and other simple or complex carbohydrates. The matrix material will typically comprise from 25 to 100 wt.%, preferably 90 to 99 wt.%, of the matrix material, based on the total weight of the matrix material.

This encapsulation method using complex coacervation of whey proteins and an oppositely charged polysaccharide *inter alia* allows a considerable reduction of the bitter taste of water-insoluble compounds such as naringin, which are therefore suitably used as core materials. The capsules contain a high concentration of core materials and a hard wall. Likewise a double emulsion (e.g. water in oil in water) can be encapsulated. This allows encapsulation of water-soluble compounds.

Advantages of the method according to the present invention include the use of dairy proteins instead of collagen/gelatin and the method is energy saving, since the process is suitably carried out at room temperature or below. The whey proteins do not need to be heated like gelatin to form the desired encapsulation.

Using this method according to the invention any type of insoluble compounds can be conveniently encapsulated (if the coacervates wet the surfaces) including drugs and other pharmaceuticals, flavors, oil, vitamins, and the like. Water-soluble compounds can be suitably encapsulated by a double emulsion. By crosslinking the coacervates the core materials are irreversibly retained in the capsules. Usual crosslinking techniques employ conventional crosslinking agents, e.g. glutaraldehyde, and/or enzymatic treatment.

The present invention provides also micro-capsules encapsulated by complex coacervation and comprising cross-linked whey proteins and polysaccharide. These micro-capsules can be suitably used in a variety of applications as mentioned previously, e.g. as a coating of substances of interest both in food and non-food applications, for protection and/or controlled release of such substances.

The following examples, which are not meant to limit the scope of the invention in any respect, illustrates the invention and shows the microencapsulation method involving whey proteins using the complex coacervation technique.

### Example 1

### Taste masking of Naringin (solid compound)

A water-insoluble bitter compound, naringin, was encapsulated into a capsule having a biopolymer shell. The capsules were formed using complex coacervation process, where the core material (naringin) is entrapped in a coacervate wall. The polymers used were Bipro (whey protein isolate, Davisco Foods International, Le Sueur, USA) and gum Arabic.

The denatured proteins present in the Bipro were removed by acidification and centrifugation. This Bipro stock solution was then mixed with a stock solution of gum Arabic, to reach a total biopolymer concentration of 1% and a protein:polysaccharide ratio of 2:1. The pH of the mixture was increased to 7.0 to avoid any electrostatic interactions between the polymers, since at this pH both Bipro and gum Arabic carry a negative charge. The naringin was added to the mixture (polymer:naringin ratio = 1:1, but can be increased) which was stirred for 30 minutes at room temperature. The pH of the mixture was adjusted at pH 4.0. At this value whey proteins are positively charged and interact with the gum Arabic to form insoluble coacervate complexes which coat the naringin crystals. This process is reversible. Therefore the coacervates need to be crosslinked to avoid their redispersion. Glutaraldehyde (0.75%) was added and the mixture was vigorously mixed for 20 minutes at room temperature. The capsules were washed in dionised water by centrifugation. The mixture was then freeze-dried. The result is a free-flowing powder. The bitter taste of the powder was strongly reduced compared to a non-encapsulated powder.

### Example 2: with fat/oil (liquid)

Oil can easily be encapsulated by complex coacervation. Most oil-soluble compounds can be dispersed in the oil phase (vitamins, flavours, PUFA's, and the like, up to their maximum solubility in the oil phase). An emulsion is prepared where whey proteins are used as an emulsifier. Sunflower oil (7.5%) is dispersed in 1% whey protein solution. 1% gum Arabic mixture is then added in order to reach a protein to polysaccharide ratio (Pr:Ps) = 2:1. The pH is then decreased to 4.0. The capsules were cross-linked by adding 0.75% glutaraldehyde solution, followed by vigorous stirring for 20 minutes. The capsules were then washed in a funnel, and eventually freeze dried.

## Claims

1. A process for micro-encapsulation of material which comprises
(a) emulsifying or dispersing said material in an aqueous solution of whey protein;
(b) introducing a weak water-soluble polyelectrolye into said emulsion or dispersion;
(c) subjecting said emulsion or dispersion to conditions whereby complex coacervation of the whey proteins occurs to form microcapsules;
(d) optionally cross-linking said microcapsules; and
(e) recovering said microcapsules.

2. The process according to claim 1, wherein complex coacervation is induced by the addition of a weak polyelectrolyte to the emulsion/dispersion.

3. The process according to claim 1, wherein complex coacervation is induced by the adjustment of the pH of the emulsion/dispersion after addition of the weak polyelectrolyte..

4. The process according to claim 1, wherein complex coacervation is induced by the combination of the addition of the weak polyelectrolyte and the adjustment of the pH.

5. The process according to claim 3 or 4, wherein the adjustment of pH is accomplished by the addition of an acid or a base to the emulsion/dispersion.

6. The process of any one of claims 1 to 5, where the weak polyelectrolyte is gum Arabic

7. The process of claim 5, wherein the acid is acetic acid, HCI, GDL, or lactic acid bacteria.

8. The process of claim 5, wherein the base is sodium hydroxyde, potassium hydroxyde, or calcium hydroxyde.

9. The process of any one of the preceding claims wherein the capsule wall is hardened by cross-linking the matrix material with a crosslinking agent or by enzymatic cross-linking

10. A coacervated micro-capsule comprising cross-linked whey proteins/polyelectrolyte - polysaccharide.
